# EUROPEAN PATENT APPLICATION

(11) **EP 4 841 337 A1**
(43) Date of publication of application: **18.11.2026**
(21) Application number: 26177968.0
(22) Date of filing: 11.05.2026
(51) Int. Cl.: G02F 1/13357, F21V 8/00

(54) **DISPLAY DEVICE**

(30) Priority: 15.05.2025 WO PCT/KR2025/006626
(71) Applicant: LG Electronics Inc., Yeongdeungpo-gu Seoul 07336 (KR)
(72) Inventor: KIM, Hyunil, 07336 Seoul (KR); LEE, Keunsoo, 07336 Seoul (KR); LEE, Jeoungoun, 07336 Seoul (KR); JEONG, Sehoon, 07336 Seoul (KR)
(74) Representative: Vossius & Partner Patentanwälte Rechtsanwälte mbB

(57) **Abstract**

A display device is disclosed. The display device includes: a light source (124) including a phosphor containing β-SiAlON, KSF, and nitride to emit white light; a display panel (110) configured to display an image using light provided from the light source; an optical sheet (125) including a prism sheet (125b, 125c) and disposed on an optical path from the light source to the display panel; a light guide panel (128) disposed on the optical path from the light source to the optical sheet; and a reflective sheet (126) positioned opposite the optical sheet with respect to the light guide panel, wherein the light source is disposed adjacent to one side surface of the light guide panel so as to provide light into the light guide panel through the one side surface of the light guide panel, wherein the light guide panel includes: a first layer (1283) having a first surface facing the reflective sheet, positioned on the reflective sheet, and including a light-absorbing material configured to selectively absorb at least one of yellow-based light or orange-based light; and a second layer (1281, 1282) having a second surface facing the optical sheet and positioned on the first layer, wherein the first layer has a reflective pattern formed on the first surface, and the second layer has a prism pattern formed on the second surface, wherein the first surface of the first layer includes: a first area (A1), adjacent to the one side surface of the light guide panel; a second area (A2) positioned between the first area and the other side surface of the light guide panel opposite to the one side surface of the light guide panel; and a third area (A3) positioned between the second area and the other side surface of the light guide panel, and wherein a number density of the reflective pattern in the first area is less than a number density of the reflective pattern in the second area, and the number density of the reflective pattern in the second area is less than a number density of the reflective pattern in the third area.

## Description

### BACKGROUND

### 1. Field

The present disclosure relates to a display device.

### 2. Description of the Related Art

With the development of information society, there has been a growing demand for various types of display devices. In order to meet such demand, various display devices such as a liquid crystal display device (LCD) have been developed and used.

A liquid crystal panel of the LCD includes a liquid crystal layer and a TFT substrate and a color filter substrate that are opposite each other with the liquid crystal layer interposed therebetween, and can display an image using light provided from a backlight unit.

Recently, with increasing interest in the image quality of display devices, color representation or color reproducibility close to true color has attracted considerable attention, and extensive research has been conducted to improve image quality for realizing natural colors.

### SUMMARY

An object of the present disclosure is to solve the above and other problems.

Another object of the present disclosure is to provide a display device capable of improving image quality.

Another object of the present disclosure is to provide a display device capable of improving color reproducibility.

Another object of the present disclosure is to provide a display device capable of effectively controlling a wavelength of light provided from a backlight unit.

Another object of the present disclosure is to reduce or suppress light concentration occurring in a backlight unit.

In accordance with an aspect of the present disclosure, the above and other objects can be accomplished by providing a display device including: a light source including a phosphor containing β-SiAlON, KSF, and nitride to emit white light; a display panel configured to display an image using light provided from the light source; an optical sheet including a prism sheet and disposed on an optical path from the light source to the display panel; a light guide panel disposed on the optical path from the light source to the optical sheet; and a reflective sheet positioned opposite the optical sheet with respect to the light guide panel, wherein the light source is disposed adjacent to one side surface of the light guide panel so as to provide light into the light guide panel through the one side surface of the light guide panel, wherein the light guide panel includes: a first layer having a first surface facing the reflective sheet, positioned on the reflective sheet, and including a light-absorbing material configured to selectively absorb at least one of yellow-based light or orange-based light; and a second layer having a second surface facing the optical sheet and positioned on the first layer, wherein the first layer has a reflective pattern formed on the first surface, and the second layer has a prism pattern formed on the second surface, wherein the first surface of the first layer includes: a first area adjacent to the one side surface of the light guide panel; a second area positioned between the first area and the other side surface of the light guide panel opposite to the one side surface of the light guide panel; and a third area positioned between the second area and the other side surface of the light guide panel, and wherein a number density of the reflective pattern in the first area is less than a number density of the reflective pattern in the second area, and the number density of the reflective pattern in the second area is less than a number density of the reflective pattern in the third area.

A display device according to the present disclosure has the following effects.

According to at least one of the embodiments of the present disclosure, it is possible to improve image quality of a display device.

According to at least one of the embodiments of the present disclosure, it is possible to improve color reproducibility.

According to at least one of the embodiments of the present disclosure, it is possible to effectively control a wavelength of light provided from a backlight unit.

According to at least one of the embodiments of the present disclosure, it is possible to reduce or suppress light concentration occurring in a backlight unit.

Further scope of applicability of the present disclosure will become apparent from the following detailed description. However, it should be understood that the detailed description and specific embodiments such as preferred embodiments of the present disclosure are given by way of example only, since various changes and modifications within the idea and scope of the present disclosure may be clearly understood by those skilled in the art.

### BRIEF DESCRIPTION OF THE DRAWINGS

FIGS. 1 to 6 illustrate examples of a display device related to the present disclosure.
FIGS. 7 and 8 illustrate examples of light and its spectrum provided by a display device related to the present disclosure.
FIG. 9 illustrates an example of a spectrum of light absorbed by a light-absorbing material provided in a display device according to an embodiment of the present disclosure.
FIGS. 10 to 14 illustrate examples of a spectrum of light provided by a light source according to embodiments of the present disclosure.
FIGS. 15 to 18 illustrate examples of a light guide panel according to an embodiment of the present disclosure.
FIGS. 19 to 21 illustrate examples of an optical assembly and a light guide panel, according to an embodiment of the present disclosure.
FIG. 22 illustrates an example of an optical path of light provided from a backlight unit to a display panel, according to an embodiment of the present disclosure.
FIG. 23 illustrates an example of a display device according to an embodiment of the present disclosure.
FIG. 24 illustrates an example of a spectrum of light provided by a display device according to an embodiment of the present disclosure.

### DETAILED DESCRIPTION

Description will now be given in detail according to exemplary embodiments disclosed herein, with reference to the accompanying drawings. For the sake of brief description with reference to the drawings, the same or equivalent components may be denoted by the same reference numbers, and description thereof will not be repeated.

In the following description, a suffix such as "module" and "unit" may be used to refer to elements or components. Use of such a suffix herein is merely intended to facilitate description of the specification, and the suffix itself is not intended to give any special meaning or function. In the present disclosure, that which is well known to one of ordinary skill in the relevant art has generally been omitted for the sake of brevity. The accompanying drawings are used to help easily understand various technical features and it should be understood that the embodiments disclosed herein are not limited by the accompanying drawings. As such, the present disclosure should be construed to extend to any alterations, equivalents, and substitutes in addition to those which are particularly set out in the accompanying drawings.

Although the terms "first", "second", etc. may be used herein to describe various elements, these elements should not be limited by these terms. These terms are only used to distinguish one element from another.

It will be understood that when a component is referred to as being "coupled" or "connected" to another component, it may be directly coupled or connected to another component, or intervening components may be present. In contrast, when a component is referred to as being "directly coupled" or "directly connected" to another component, there are no intervening components present.

A singular representation may include a plural representation unless the context clearly indicates otherwise.

It will be further understood that the terms "comprise", "include", "have", etc. when used in this specification, specify the presence of stated features, numbers, steps, operations, elements, components, or combinations thereof, but do not preclude the presence or addition of one or more other features, numbers, steps, operations, elements, components, or combinations thereof.

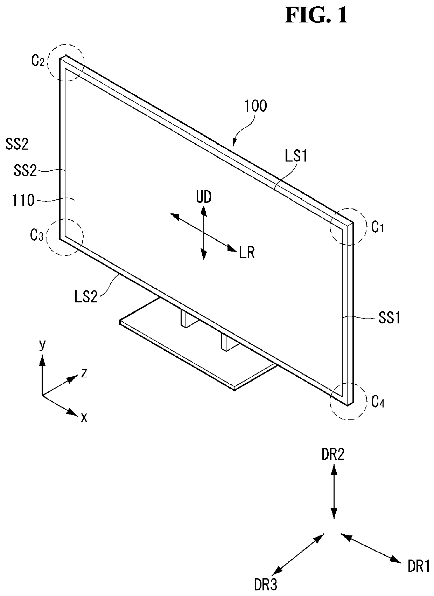

Referring to FIG. 1, a display device may include a first long side LS1, a second long side LS2 opposite the first long side LS1, a first short side SS1 adjacent to the first long side LS1 and the second long side LS2, and a second short side SS2 opposite the first short side SS1.

An area of the first short side SS1 may be referred to as a first side area; an area of the second short side SS2 may be referred to as a second side area opposite the first side area; an area of the first long side LS1 may be referred to as a third side area that is adjacent to the first side area and the second side area and positioned between the first side area and the second side area; and an area of the second long side LS2 may be referred to as a fourth side area that is adjacent to the first side area and the second side area, positioned between the first side area and the second side area, and opposite the third side area.

For convenience of explanation, it is illustrated and described that lengths of the first and second long sides LS1 and LS2 are greater than lengths of the first and second short sides SS1 and SS2, but the lengths of the first and second long sides LS1 and LS2 may be substantially equal to the lengths of the first and second short sides SS1 and SS2.

In the following description, a first direction DR1 may be a direction parallel to the long sides LS1 and LS2 of the display device 100, and a second direction DR2 may be a direction parallel to the short sides SS1 and SS2 of the display device 100. A third direction DR3 may be a direction perpendicular to the first direction DR1 and/or the second direction DR2.

The first direction DR1 and the second direction DR2 may be collectively referred to as a horizontal direction. In addition, the third direction DR3 may be referred to as a vertical direction.

A side at which the display device displays an image may be referred to as a forward direction or a front side or front surface. When the display device displays an image, a side at which the image cannot be viewed may be referred to as a rearward direction or a rear side or rear surface. When the display device is viewed from the forward direction or the front side, the first long side LS1 may be referred to as an upper side or an upper surface, and the second long side LS2 may be referred to as a lower side or a lower surface. In the same manner, the first short side SS1 may be referred to as a right side or a right surface, and the second short side SS2 may be referred to as a left side or a left surface.

The first long side LS1, the second long side LS2, the first short side SS1, and the second short side SS2 may be referred to as edges of the display device. In addition, points or areas where the first long side LS1, the second long side LS2, the first short side SS1, and the second short side SS2 meet one another may be referred to as corners. For example, a point where the first long side LS1 and the first short side SS1 meet may be referred to as a first corner C1; a point where the first long side LS1 and the second short side SS2 meet may be referred to as a second corner C2; a point where the second short side SS2 and the second long side LS2 meet may be referred to as a third corner C3; and a point where the second long side LS2 and the first short side SS1 meet may be referred to as a fourth corner C4.

A direction from the first short side SS1 to the second short side SS1 or a direction from the second short side SS2 to the first short side SS1 may be referred to as a left-right direction LR. A direction from the first long side LS1 to the second long side LS2 or a direction from the second long side LS2 to the first long side LS1 may be referred to as an up-down direction UD.

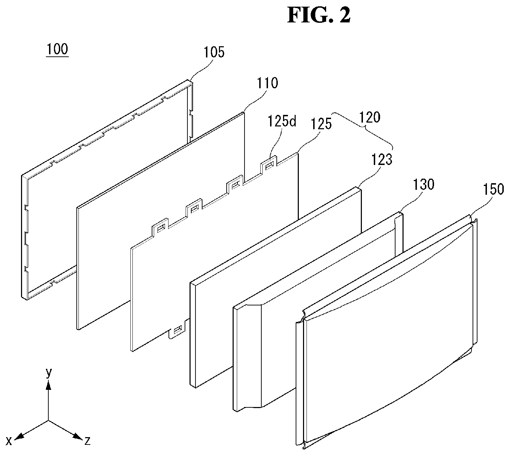

Referring to FIG. 2, a front cover 105 may cover an edge of a display panel 110.

The display panel 110 may be provided on the front surface of the display device 100 and may display an image. The display panel 110 may display an image in such a manner that each of a plurality of pixels outputs red, green or blue (RGB) light in accordance with timing. The display panel 110 may be divided into an active area in which an image is displayed and a de-active area in which no image is displayed. The display panel 110 may include a front substrate and a rear substrate that are positioned opposite each other with a liquid crystal layer interposed therebetween.

The front substrate may include a plurality of pixels each including red (R), green (G) and blue (B) subpixels. The front substrate may output light corresponding to red, green or blue color according to a control signal.

The rear substrate may include switching elements. The rear substrate may switch a pixel electrode. For example, the pixel electrode may change the molecular arrangement of the liquid crystal layer in response to a control signal input from the outside. The liquid crystal layer may include liquid crystal molecules. The arrangement of the liquid crystal molecules may be changed according to a voltage difference between the pixel electrode and a common electrode. The liquid crystal layer may transmit light provided from a backlight unit 120 to the front substrate or block the light.

The backlight unit 120 may be positioned behind the display panel 110. The backlight unit 120 may include light sources. The backlight unit 120 may be coupled to a frame 130 at the front of the frame 130.

The backlight unit 120 may be driven by a full driving scheme or a partial driving scheme such as local dimming, impulsive driving, etc. The backlight unit 120 may include an optical sheet 125 and an optical layer 123.

The optical sheet 125 may allow light from the light source to be uniformly transferred to the display panel 110. The optical sheet 125 may be composed of a plurality of layers. For example, the optical sheet 125 may include a prism sheet, a diffusion sheet, and the like.

The optical sheet 125 may be provided with a coupling portion 125d. The coupling portion 125d may be coupled to the front cover 105, the frame 130, and/or a back cover 150. Alternatively, the coupling portion 125d may be fastened to a structure formed on or coupled to the front cover 105, the frame 130, and/or the back cover 150.

The frame 130 may serve to support components of the display device 100. For example, a component such as the backlight unit 120 may be coupled to the frame 130. The frame 130 may be made of a metal material such as an aluminum alloy.

The back cover 150 may be positioned on the rear surface or at the rear of the display device 100. The back cover 150 may be coupled to the frame 130 and/or the front cover 105. For example, the back cover 150 may be an injection-molded part made of a resin material.

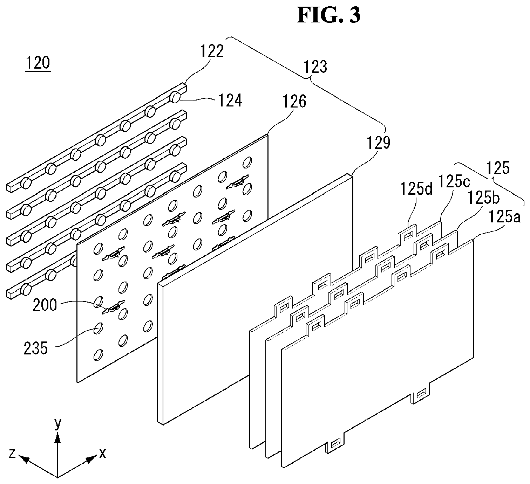

Referring to FIG. 3, the backlight unit 120 may include an optical layer 123 that includes a substrate 122, at least one optical assembly 124, and a reflective sheet 126 or a diffusion plate 129, and an optical sheet 125 that is positioned on the front side of the optical layer 123.

The substrate 122 may be configured in the form of a plurality of straps that extend in a first direction and are spaced at predetermined intervals in a second direction perpendicular to the first direction.

At least one optical assembly 124 may be mounted on the substrate 122. An electrode pattern for connecting an adapter and the optical assembly 124 may be formed on the substrate 122. For example, a carbon nanotube (CNT) electrode pattern may be formed on the substrate 122 to connect the adapter and the optical assembly 124.

The substrate 122 may be made of at least one of polyethylene terephthalate (PET), glass, polycarbonate (PC), and silicon. The substrate 122 may be a printed circuit board (PCB) on which at least one optical assembly 124 is mounted.

The optical assemblies 124 may be disposed on the substrate 122 at predetermined intervals in the first direction. A diameter of the optical assembly 124 may be greater than a width of the substrate 122. In other words, the diameter of the optical assembly 124 may be greater than a length of the substrate 122 in the second direction.

The optical assembly 124 may be a light emitting diode (LED) chip or an LED package including at least one LED chip.

The optical assembly 124 may consist of a colored LED that emits light of at least one of red, blue, and green, or a white LED. The colored LED may include at least one of a red LED, a blue LED, and a green LED.

The reflective sheet 126 may cover the substrate 122. The reflective sheet 126 may be positioned on an area of the substrate 122 excluding an area where the optical assembly 124 is formed. The reflective sheet 126 may include a plurality of through-holes 235. The optical assembly 124 may be inserted into the through-hole 235 of the reflective sheet 126.

The reflective sheet 126 may reflect light emitted from the optical assembly 124 toward the optical sheet 125. In addition, the reflective sheet 126 may re-reflect light reflected from the diffusion plate 129.

The reflective sheet 126 may include at least one of a metal and a metal oxide as a reflective material. For example, the reflective sheet 126 may include a metal and/or a metal oxide having high reflectivity such as at least one of aluminum (Al), silver (Ag), gold (Au), and titanium dioxide (TiO₂).

A resin may be deposited on the optical assembly 124 and/or the reflective sheet 126. The resin may serve to diffuse light emitted from the optical assembly 124. The diffusion plate 129 may diffuse light emitted from the optical assembly 124 upward.

The optical sheet 125 may be positioned at the front of the diffusion plate 129. A rear surface of the optical sheet 125 may be in close contact with the diffusion plate 129, and a front surface of the optical sheet 125 may be in close contact with the rear surface of the display panel 110 (see FIG. 1).

The optical sheet 125 may include at least one sheet. In detail, the optical sheet 125 may include one or more prism sheets and/or one or more diffusion sheets. The plurality of sheets included in the optical sheet 125 may be adhered to and/or in close contact with each other.

The optical sheet 125 may be composed of a plurality of sheets having different functions. For example, the optical sheet 125 may include first to third optical sheets 125a to 125c. For example, the first optical sheet 125a may be a diffusion sheet, and the second and third optical sheets 125b and 125c may be prism sheets. The number and/or position of the diffusion sheet and the prism sheet may be varied.

The diffusion sheet may prevent light from the diffusion plate 129 from being partially concentrated, thereby achieving more uniform distribution of light. The prism sheet may collect light from the diffusion sheet and provide the light to the display panel 110.

The coupling portion 125d may be formed on at least one of the sides or edges of the optical sheet 125. The coupling portion 125d may be formed on at least one of the first to third optical sheets 125a to 125c.

The coupling portion 125d may be formed on a long side of the optical sheet 125. Coupling portions 125d formed on a first long side and a second long side of the optical sheet 125 may be asymmetric. For example, positions and/or numbers of the coupling portions 125d on the first long side and the second long side may be different.

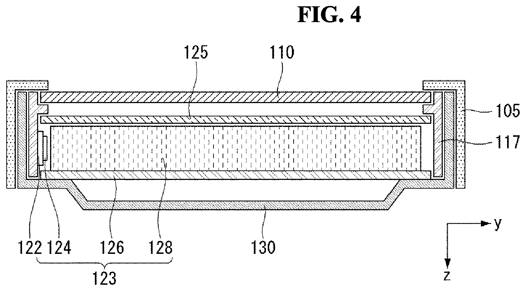

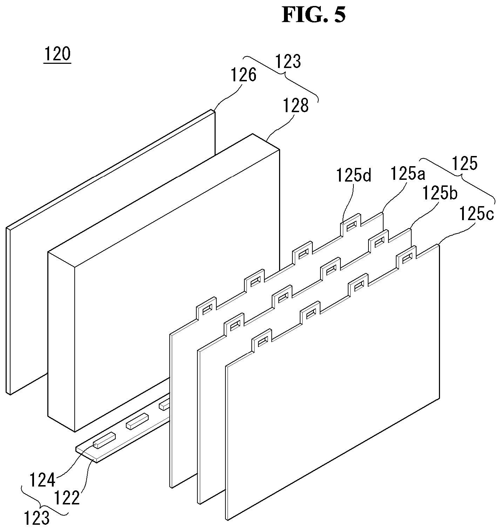

Referring to FIGS. 4 and 5, the optical layer 123 may include a substrate 122, a reflective sheet 126, an optical assembly 124, and/or a light guide panel 128. The optical layer 123 may not include one or more of these components.

The optical layer 123 may be positioned at the front of the frame 130. The optical layer 123 may be disposed between the frame 130 and the display panel 110. The optical layer 123 may be supported by the frame 130.

The substrate 122 may be positioned inside the frame 130. The substrate 122 may be coupled to a first guide panel 117. The substrate 122 may be directly coupled to the first guide panel 117. For example, the substrate 122 may be coupled to at least one of the first guide panel 117, the frame 130, and the front cover 105. The front cover 105 may be referred to as a top case 105.

The substrate 122 may be positioned adjacent to a side surface of the reflective sheet 126 and/or the light guide panel 128. That is, a front surface of the substrate 122 may face the optical layer 123. The substrate 124 may be spaced apart from the reflective sheet 126 and/or the light guide panel 128 by a predetermined distance.

The substrate 122 may be positioned at one side of another component of the optical layer 123. The optical assembly 124 or optical assemblies 124 may be mounted on the substrate 122. An electrode pattern for connecting an adapter and the optical assembly 124 may be formed on the substrate 122. For example, a carbon nanotube (CNT) electrode pattern may be formed on the substrate 122 to connect the adapter and the optical assembly 124. For example, the substrate 122 may be a printed circuit board (PCB).

The optical assemblies 124 may be disposed on the substrate 122 at predetermined intervals. Light provided from the optical assembly 124 may be transferred to the light guide panel 128.

The optical assembly 124 may be a light emitting diode (LED) chip or an LED package including at least one LED chip.

A light source included in the optical assembly 124 may be of a COB (Chip On Board) type. The COB type may have a structure in which an LED chip serving as a light source is directly coupled to the substrate 122.

The light guide panel 128 may totally internally reflect light incident from the optical assembly 124. The reflective sheet 126 may be positioned at the rear of the light guide panel 128. The reflective sheet 126 may reflect light provided from the optical assembly 124 and emitted from the light guide panel 128. The reflective sheet 126 may reflect light from the light guide panel 128 back into the light guide panel 128. An air gap may be formed between the light guide panel 128 and the optical sheet 125.

The optical sheet 125 may be positioned at the front of the light guide panel 128. A rear surface of the optical sheet 125 may face the light guide panel 128, and a front surface of the optical sheet 125 may face the rear surface of the display panel 110.

The optical sheet 125 may include at least one sheet. The optical sheet 125 may include at least one or more prism sheets and/or one or more diffusion sheets. The plurality of sheets included in the optical sheet 125 may be adhered to and/or in close contact with each other.

For example, the optical sheet 125 may include first to third optical sheets 125a to 125c. The first optical sheet 125a may be a diffusion sheet, and the second and third optical sheets 125b and 125c may be prism sheets. The number and/or position of the diffusion sheet and the prism sheet may be varied.

The diffusion sheet may prevent light from the light guide panel 128 from being partially concentrated, thereby achieving more uniform distribution of light. The prism sheet may collect light from the diffusion sheet and direct the light toward the display panel 110.

The coupling portion 125d may be formed on at least one of the sides or edges of the optical sheet 125. The coupling portion 125d may be formed on at least one of the first to third optical sheets 125a to 125c.

The coupling portion 125d may be formed on an edge of a long side of the optical sheet 125. Coupling portions 125d on a first long side and a second long side of the optical sheet 125 may be asymmetric. For example, positions and/or numbers of the coupling portions 125d on the first long side and the second long side may be different.

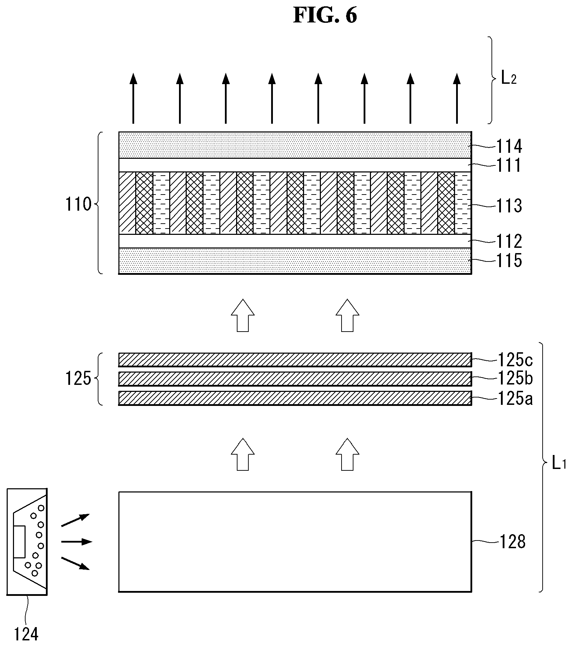

Referring to FIG. 6, the optical assembly 124 may provide light to the light guide panel 128, and light reflected and/or refracted by the light guide panel 128 may be directed toward the optical sheet 125. Light diffused and/or collected by the optical sheet 125 may be provided to the display panel 110. The display panel 110 may display an image using the light.

Light provided from the optical assembly 124 before passing through the display panel 110 may be referred to as L1, and light having passed through the display panel 110 may be referred to as L2. L1 and L2 may have different light spectra.

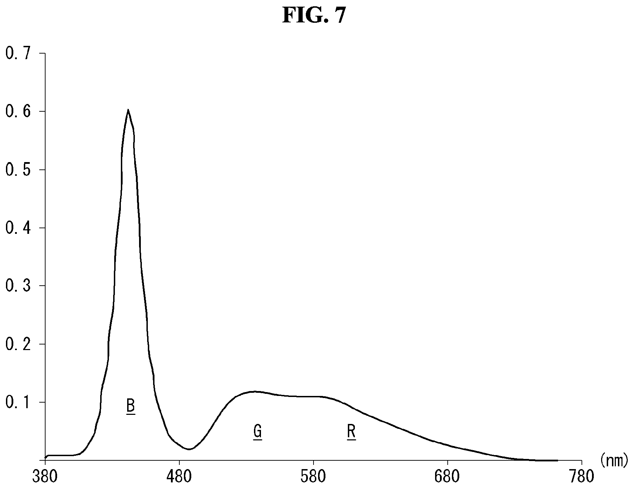

FIG. 7 illustrates an example of the spectrum of light L1. In FIG. 7, the x-axis represents a wavelength (nm) of light, and the y-axis represents an intensity of light. B may represent an intensity or distribution of blue-based light, G may represent an intensity or distribution of green-based light, and R may represent an intensity or distribution of red-based light.

The optical assembly 124 (see FIG. 6) may include an LED as a light source. The optical assembly 124 may emit white light. In this case, the optical assembly 124 that emits white light may be a package in which a blue LED is combined with a green or red-based phosphor. The light source having such a configuration may provide light L1 of the wavelength and/or intensity illustrated in FIG. 7.

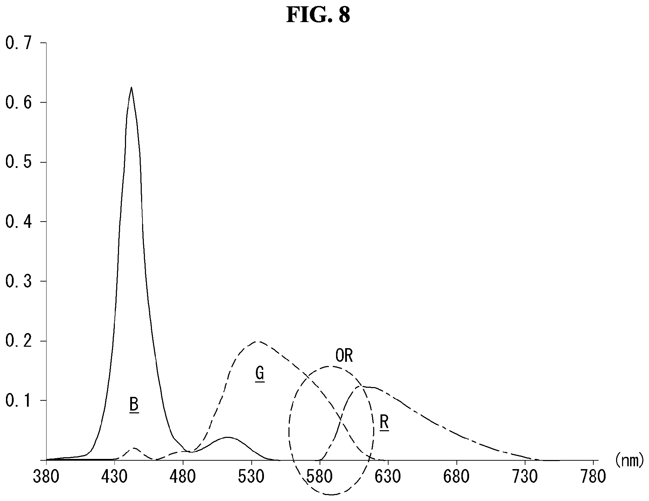

FIG. 8 illustrates an example of the spectrum of light L2. Specifically, FIG. 8 illustrates an example of a spectrum of light provided from the display panel 110 (see FIG. 6) to the outside, for example, light used to display an image. It can be seen that blue-based light B exhibits high color purity, whereas green-based light G and red-based light R exhibit relatively low color purity due to an overlapping region OR between them. Relatively low color purity may indicate poor color representation, which may make it difficult to achieve high image quality.

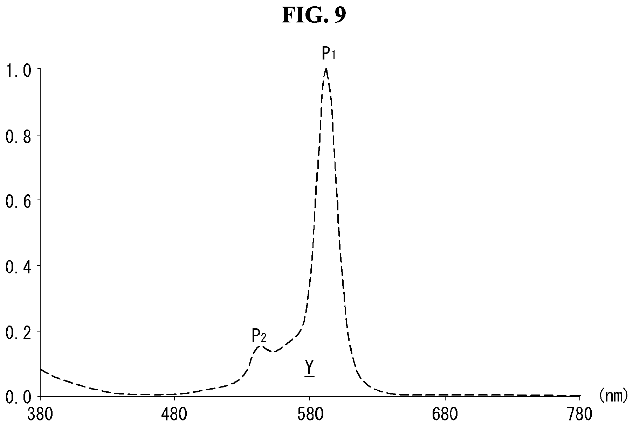

FIG. 9 illustrates an example of a spectrum of light absorbed by a light- absorbing layer or a light-absorbing portion.

The light-absorbing portion may include an absorber or a light-absorbing material. For example, the absorber or the light-absorbing material may be Tetra Aza Porphyrin (see the Chemical Formula below).

### Chemical Formula

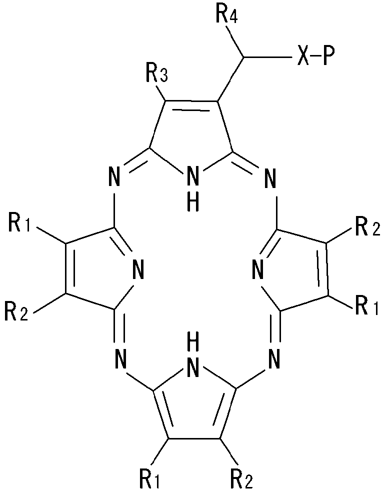

Referring to FIG. 9, the light-absorbing portion may absorb light in a predetermined wavelength band, and may absorb yellow-based light. For example, the light-absorbing portion may absorb light having a wavelength in a range of 540 nm to 610 nm. A first peak (P1) value may correspond to, for example, a wavelength region of 585 nm or 595 nm. A second peak (P2) value may correspond to, for example, a wavelength region of 543 nm. Light energy absorbed by the light-absorbing portion may be dissipated through rotation or vibration of electrons. In another example, the light-absorbing portion may absorb light having a wavelength in a range of 570 nm to 610 nm.

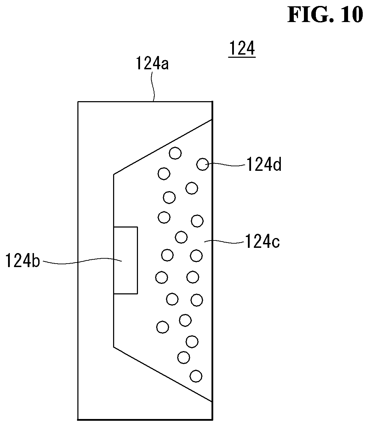

Referring to FIG. 10, the optical assembly 124 may include a housing 124a, a light source 124b, an encapsulant 124c, and a phosphor 124d. The housing 124a may define an accommodation space, and the accommodation space may be formed in a concavely recessed manner. The light source 124b may be mounted in the accommodation space of the housing 124a. For example, the light source 124b may be a blue LED. The encapsulant 124c may include phosphors 124d. The encapsulant 124c may fill the accommodation space of the housing 124a in a liquid state in which the phosphors 124d are mixed, and then may be cured. Accordingly, the phosphors 240 may be distributed over the light source 124b. The phosphors 124d may be in a powder form. The phosphors 124d may be green-based or red-based phosphors. The red-based phosphor 124d may appear yellow to the naked eye but may emit red light. For example, the green-based phosphor 124d may be β-SiAlON. For example, the red-based phosphor may be KSF (K2SiF6:Mn4+). In another example, the red-based phosphor may include KSF (K2SiF6:Mn4+) and Nitride.

A mixing ratio may be, for example, such that the green-based phosphor 124d is present in an amount of 42% to 62%, and the red-based phosphor 124d is present in an amount of 37% to 57%. The phosphors 124d may be mixed so that a total proportion thereof is 100% within the above ranges.

A content ratio may be, for example, such that, when the green-based phosphor 124d is set to 1, a ratio of the red-based phosphor 124d relative thereto may be in a range of 0.71 to 0.93.

A content of the phosphors 124d relative to the encapsulant 124c may be, for example, 4.2% to 6.8%.

Accordingly, the optical assembly 24 may provide white light.

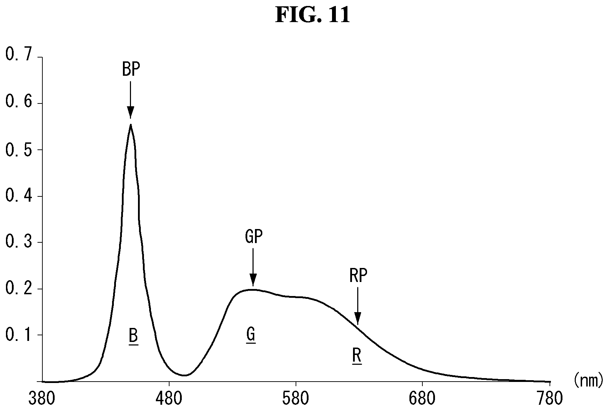

FIGS. 11 to 14 illustrate examples of a spectrum of light provided by an optical assembly including the phosphors described with reference to FIG. 10.

Referring to FIG. 11, based on an intensity BP (100%) of blue-based light B, an intensity GP of green-based light G may be 36%, and an intensity RP of red-based light R may be 25%.

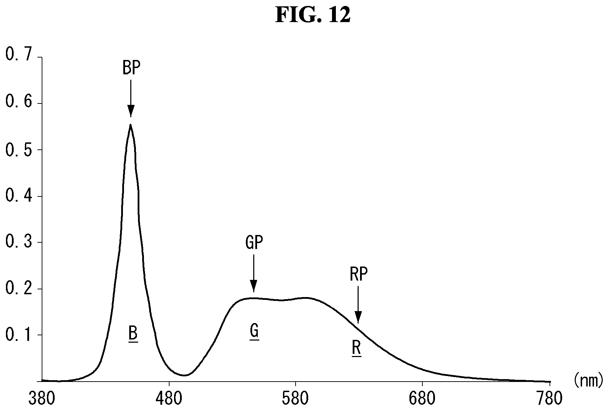

Referring to FIG. 12, based on an intensity BP (100%) of blue-based light B, an intensity GP of green-based light G may be 33%, and an intensity RP of red-based light R may be 26%.

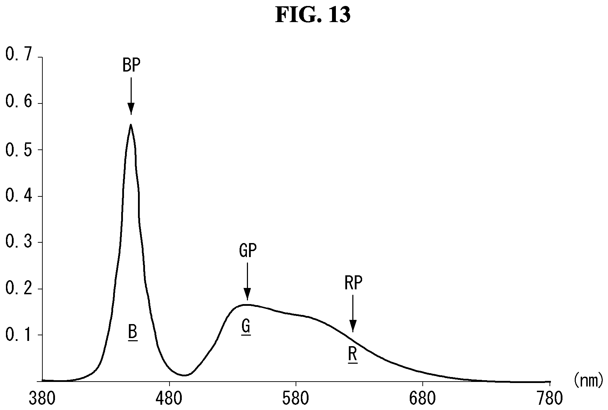

Referring to FIG. 13, based on an intensity BP (100%) of blue-based light B, an intensity GP of green-based light G may be 30%, and an intensity RP of red-based light R may be 19%.

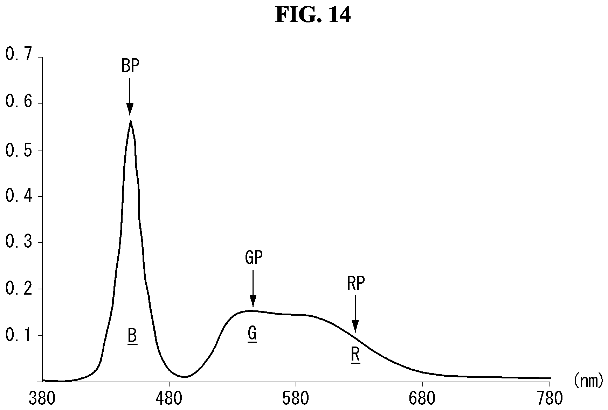

Referring to FIG. 14, based on an intensity BP (100%) of blue-based light B, an intensity GP of green-based light G may be 28%, and an intensity RP of red-based light R may be 20%.

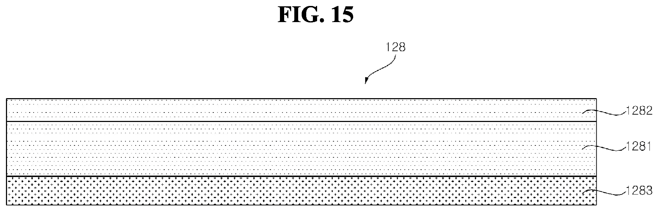

Referring to FIG. 15, the light guide panel 128 may include a plurality of layers 1281, 1282, and 1283. The light guide panel 128 may include a middle layer 1281, a top layer 1282, and/or a bottom layer 1283. For example, the middle layer 1281 may be formed of resin. The middle layer 1281 may be transparent. The top layer 1282 may be stacked on the middle layer 1281. For example, the top layer 1282 may be formed of resin. The top layer 1282 may be integrally formed with the middle layer 1281. The top layer 1282 and the middle layer 1281 may be collectively referred to as a second layer (1281, 1282). The top layer 1282 may be transparent. A thickness of the top layer 1282 may be less than a thickness of the middle layer 1281. For example, the middle layer 1281 and the top layer 1282 may consist entirely of resin. In another example, the middle layer 1281 and the top layer 1282 may be formed of a resin containing a yellowing-resistant material.

The middle layer 1281 may be stacked on the bottom layer 1283. For example, the bottom layer 1283 may be formed of resin. The bottom layer 1283 may include a light-absorbing material. For example, the light-absorbing material may be a powder, and may be mixed or dispersed in a resin base. The bottom layer 1283 may be referred to as a light-absorbing layer 1283 or a first layer 1283.

For example, a resin composition forming the light guide panel 128 may include a master batch and a resin, and the master batch may include a light-absorbing material. For example, the master batch may be present in an amount of 0.2% (w/v) based on the total volume of the resin composition. For example, the light-absorbing material may be present in an amount of 0.005% (w/w) based on the total weight of the master batch. For example, the light-absorbing material may be Tetra Aza Porphyrin.

The light guide panel 128 including the middle layer 1281, the top layer 1282, and/or the bottom layer 1283 may have an extruded 3-layer structure. In another example, the light guide panel 128 including the bottom layer 1283, in which the middle layer 1281 and the top layer 1282 are integrally formed, may have an extruded 2-layer structure.

A thickness of the bottom layer 1283 may be less than a combined thickness of the middle layer 1281 and the top layer 1282. For example, the thickness of the bottom layer 1283 may be 0.1 mm, and the combined thickness of the middle layer 1281 and the top layer 1282 may be 1.9 mm. In another example, the thickness of the bottom layer 1283 may be in a range of 60 µm to 100 µm, and the combined thickness of the middle layer 1281 and the top layer 1282 may be 1900 µm.

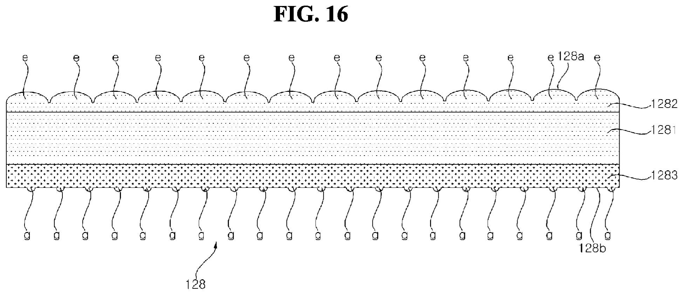

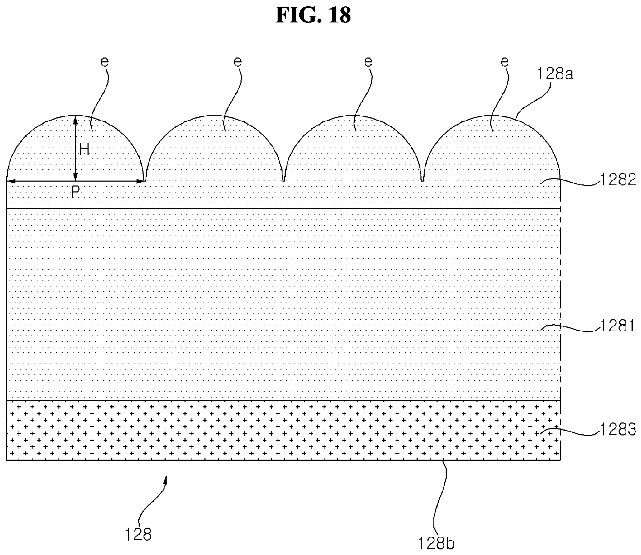

Referring to FIGS. 16 to 18, the light guide panel 128 may include an upper surface 128a and a lower surface 128b. For example, a convex lens (e) pattern may be formed on the upper surface 128a of the light guide panel 128. For example, a convex lens (g) pattern or an embossed dot (g) pattern may be formed on the lower surface 128b of the light guide panel 128 (see FIG. 16). The upper surface 128a of the light guide panel 128 may function as a prism, and the lower surface 128b of the light guide panel 128 may function as a reflector.

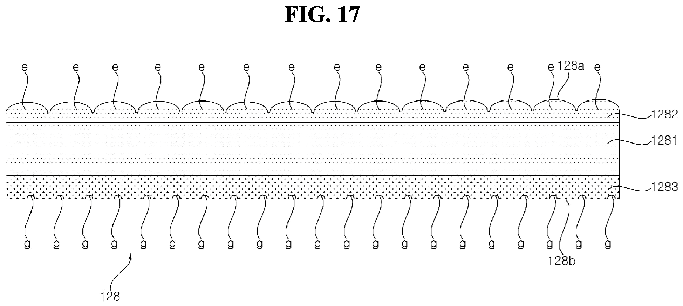

In another example, a concave lens (g) pattern or a debossed dot (g) pattern may be formed on the lower surface 128b of the light guide panel 128 (see FIG. 17). The upper surface 128a of the light guide panel 128 may function as a prism, and the lower surface 128b of the light guide panel 128 may function as a reflector.

The upper surface 128a of the light guide panel 128 may be an upper surface 128a of the top layer 1282, and the lower surface 128b of the light guide panel 128 may be the bottom layer 1283 of the light guide panel 128.

A plurality of convex lenses (e) may be formed on the upper surface 128a of the light guide panel 128. The convex lenses (e) may form a pattern. For example, the convex lens (e) may have a height H in a range of 18 µm to 38 µm, and the convex lens (e) may have a pitch P in a range of 160 µm to 180 µm. In another example, the convex lens (e) may have a height H of 29.3 µm, and the convex lens (e) may have a pitch P of 170 µm.

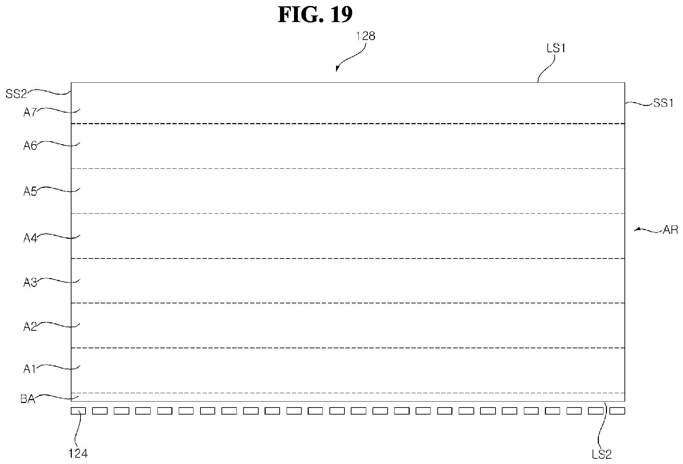

Referring to FIG. 19, the light guide panel 128 may include a plurality of areas AR. The light guide panel 128 may include long sides LS1, LS2 and short sides SS1, SS2. The plurality of areas AR may be formed along the long sides LS1 and LS2, and may be divided along the short sides SS1 and SS2. For example, the light guide panel 128 may include seven areas AR. The plurality of areas AR of the light guide panel 128 may include a first area A1, a second area A2, a third area A3, a fourth area A4, a fifth area A5, a sixth area A6, and/or a seventh area A7.

The first area A1 may be formed along the second long side LS2 of the light guide panel 128. A length of the first area A1 may be parallel to the second long side LS2, and a width of the first area A1 may be parallel to the first short side SS1 or the second short side SS2.

The seventh area A7 may be formed along the first long side LS1 of the light guide panel 128. A length of the seventh area A7 may be parallel to the first long side LS1, and a width of the seventh area A7 may be parallel to the first short side SS1 or the second short side SS2.

The second area A2 may be formed along the second long side LS2 of the light guide panel 128. The second area A2 may be positioned between the first area A1 and the seventh area A7, and may be adjacent to the first area A1.

The sixth area A6 may be formed along the first long side LS1 of the light guide panel 128. The sixth area A6 may be positioned between the seventh area A7 and the second area A2, and may be adjacent to the seventh area A7.

The third area A3 may be formed along the second long side LS2 of the light guide panel 128. The third area A3 may be positioned between the second area A2 and the sixth area A6, and may be adjacent to the second area A2.

The fifth area A5 may be formed along the first long side LS1 of the light guide panel 128. The fifth area A5 may be positioned between the third area A3 and the sixth area A6, and may be adjacent to the sixth area A6.

The fourth area A4 may be formed along the first long side LS1 or the second long side LS2 of the light guide panel 128. The fourth area A4 may be positioned between the third area A3 and the fifth area A5.

A buffer area BA may be formed between the first area A1 and an edge of the second long side LS2 of the light guide panel 128. The buffer area BA may have a width less than the width of the first area A1.

Referring also to FIGS. 16 and 17, the lens pattern (e) or the dot pattern (g) formed on the upper surface 128a or the lower surface 128b of the light guide panel 128 may be formed in the plurality of areas AR. Hereinafter, the lens pattern (e) or the dot pattern (g) will be collectively referred to as a pattern. For example, the pattern may be composed of a plurality of lenses (e) or a plurality of dots (g). In another example, the pattern may be composed of a plurality of printed dots (g).

For convenience of description, the pattern will be described as being formed by a plurality of dots (e, g). In the following description, a total number of dots (e, g) formed on the upper surface of 128a or the lower surface 128b of the light guide panel 128 is defined as 100%.

The number density of the plurality of dots (e, g) may gradually increase in a direction from the first area A1 toward the seventh area A7. The number density of the plurality of dots (e, g) may gradually increase from the first area A1 to the sixth area A6, and the number density of the plurality of dots (e, g) in the seventh area A7 may be less than the number density of the plurality of dots (e, g) in the sixth area A6. In this case, the number density of the plurality of dots (e, g) in the seventh area A7 may be greater than the number density of the plurality of dots (e, g) in the fifth area A5.

The number of a first plurality of dots (e, g) formed in the first area A1 may be 2% to 3%. For example, the number of the first plurality of dots (e, g) formed in the first area A1 may be 2.5%.

The number of a second plurality of dots (e, g) formed in the second area A2 may be 3% to 4%. For example, the number of the second plurality of dots (e, g) formed in the second area A2 may be 3.5%.

The number of a third plurality of dots (e, g) formed in the third area A3 may be 6% to 7%. For example, the number of the third plurality of dots (e, g) formed in the third area A3 may be 6.5%.

The number of a fourth plurality of dots (e, g) formed in the fourth area A4 may be 14.5% to 15.5%. For example, the number of the fourth plurality of dots (e, g) formed in the fourth area A4 may be 15%.

The number of a fifth plurality of dots (e, g) formed in the fifth area A5 may be 17% to 18%. For example, the number of the fifth plurality of dots (e, g) formed in the fifth area A5 may be 17.5%.

The number of a sixth plurality of dots (e, g) formed in the sixth area A6 may be 28.5% to 29.5%. For example, the number of the sixth plurality of dots (e, g) formed in the sixth area A6 may be 29%.

The number of a seventh plurality of dots (e, g) formed in the seventh area A7 may be 25.5% to 26.5%. For example, the number of the seventh plurality of dots (e, g) formed in the seventh area A7 may be 26%.

The plurality of dots (e, g) may not be formed in the buffer area BA.

Accordingly, light concentration in an area adjacent to the optical assembly 124 may be reduced or suppressed, thereby improving light uniformity and enhancing color reproducibility of the display device 100 (see FIG. 1).

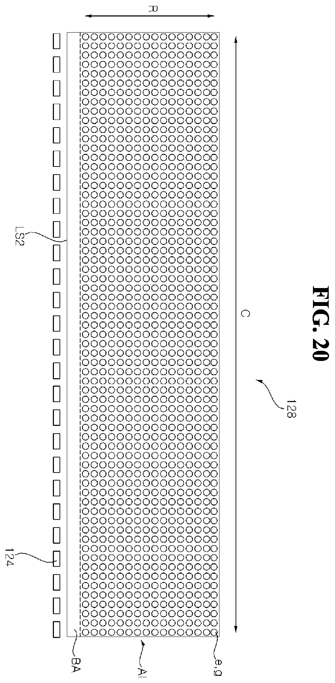

Referring to FIG. 20, the plurality of dots (e, g) may be arranged in a matrix of rows and columns (R, C). For example, the plurality of dots (e, g) may be sequentially arranged in a first column (C), a second column (C), a third column(C), and so on, and may be sequentially arranged in a first row (R), a second row (R), a third row (R), and so on.

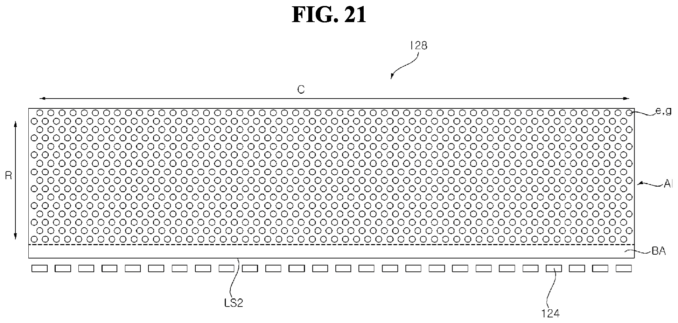

Referring to FIG. 21, the plurality of dots (e, g) may be alternately arranged in a matrix of rows and columns (R, C). For example, the plurality of dots (e, g) may be sequentially arranged in odd-numbered columns (C), such as a first column (C), a third column (C), a fifth column (C), and so on, and may be sequentially arranged in odd-numbered rows (R), such as a first row (R), a third row (R), a fifth row (R), and so on. For example, the plurality of dots (e, g) may be sequentially arranged in even-numbered columns (C), such as a second column (C), a fourth column (C), a sixth column (C), and so on, and may be sequentially arranged in even-numbered rows (R), such as a second row (R), a fourth row (R), a sixth row (R), and so on. The plurality of dots (e, g) may be alternately arranged in odd-numbered rows and columns (R, C) and even-numbered rows and columns (R, C).

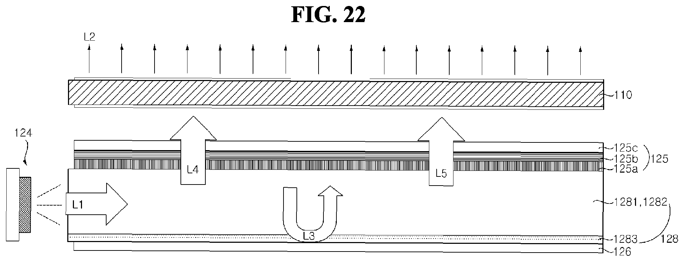

Referring to FIG. 22, the light guide panel 128 may be positioned on the reflective sheet 126. The light guide panel 128 may be stacked on the reflective sheet 126. The optical sheet 125 may be positioned on the light guide panel 128. The optical sheet 125 may be stacked on the light guide panel 128. The display panel 110 may be positioned opposite the light guide panel 128 with respect to the optical sheet 125.

Light provided from the optical assembly 124 may be incident on a side surface of the light guide panel 128. Light L1 incident on the side surface of the light guide panel 128 may be totally internally reflected, refracted, and scattered within the light guide panel 128. Light totally internally reflected within the light guide panel 128 may exit through the upper surface of the light guide panel 128 toward the optical sheet (L4). Light totally internally reflected within the light guide panel 128 may exit through the lower surface of the light guide panel 128 toward the reflective sheet (L3). The light L3 exiting through the lower surface of the light guide panel 128 may be reflected by the reflective sheet 126 and re-enter the light guide panel 128. The light re-entering the light guide panel 128 may be directed toward the optical sheet 125 through the upper surface of the light guide panel 128 (L5). The light L4, L5 may be provided to the display panel 110 after passing through the optical sheet 125. Light L2 having passed through the display panel 110 may be visible from the front surface of the display device 100 (see FIG. 1).

The light L1 provided from the optical assembly 124 may undergo a change in spectrum due to light absorbed by the light-absorbing layer 1283 (see FIG. 15) formed on the light guide panel 128. Accordingly, the light L2 visible from the front surface of the display device 100 (see FIG.1) through the display panel 110 may have improved color reproducibility.

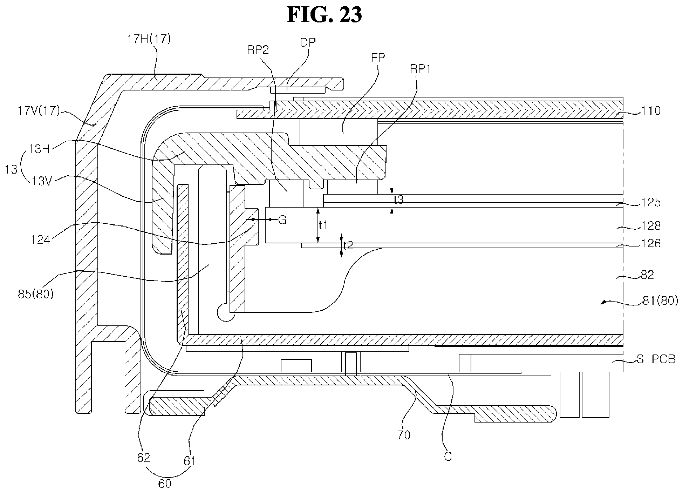

Referring to FIG. 23, a frame 60 may include a flat portion 61 and a bending portion 62. The flat portion 61 may form a front surface of the frame 60, and may be formed generally flat. The bending portion 62 may be bent forward from an edge of the flat portion 61, and may extend along the edge of the flat portion 61.

A housing 80 may be positioned on the flat portion 61. The housing 80 may be adjacent to a lower side of the frame 60. The housing 80 may include a rear part 81 and a side part 85. The rear part 81 may be coupled or fixed to the flat portion 61. The side part 85 may be bent forward from a lower end of the rear part 81.

The housing 80 may include a protruding portion 82 protruding forward from a front surface of the rear part 81. The side part 85 may protrude further forward than the protruding portion 82. The side part 85 may be positioned between the bending portion 62 and the protruding portion 82, and may be spaced apart from the bending portion 62 and the protruding portion 82. The housing 80 may include a metal material such as aluminum (Al). The housing 80 may be referred to as a heat sink 80.

A guide panel 13 may include a vertical portion 13V and a horizontal portion 13H. The vertical portion 13V may extend along the bending portion 62, and may cover an outside of the bending portion 62. The horizontal portion 13H may intersect the vertical portion 13V, and may partially cover the front of the frame 60 and the housing 80.

The optical assembly 124 may be aligned with a side surface of the light guide panel 128. A gap G between the optical assembly 124 and the side surface of the light guide panel 128 may be about 0.35 mm.

The light guide panel 128 may be positioned between the horizontal portion 13H and the protruding portion 82. The reflective sheet 126 may face a rear surface of the light guide panel 128. For example, a thickness t2 of the reflective sheet 126 may be 0.255 mm. The thickness of the reflective sheet 126 may be a thickness including the light-absorbing layer 1283 (see FIG. 15).

The light guide panel 128 may be stacked on the reflective sheet 126. For example, a thickness t1 of the light guide panel 128 may be 2 mm.

The optical sheet 125 may be disposed or stacked on a front surface of the light guide panel 128. For example, a thickness t3 of the optical sheet 125 may be 0.41 mm. A portion of the rear surface of the light guide panel 128 adjacent to a lower side of the light guide panel 128 may be supported by the protruding portion 82. Meanwhile, portions adjacent to an upper side, a left side, and a right side of the light guide panel 128 may be supported by the frame 60.

The display panel 110 may be positioned opposite the optical sheet 125 with respect to the horizontal portion 13H. A front pad FP may be disposed between the display panel 110 and the horizontal portion 13H, and may be coupled to the horizontal portion 13H. A first rear pad RP1 may be disposed between the horizontal portion 13H and the optical sheet 125, and may be coupled to the horizontal portion 13H. A second rear pad RP2 may be disposed between the horizontal portion 13H and the light guide panel 128, and may be coupled to the horizontal portion 13H.

An end frame 17 may include a first part 17V and a second part 17H. The first part 17V may extend along the vertical portion 13V, and may cover an outside of the vertical portion 13V. The second part 17H may intersect the first part 17V, and may partially cover the front of the guide panel 13 and the display panel 110. A pad DP may be disposed between the second part 17H and the display panel 110, and may be coupled to the second part 17H.

Meanwhile, a cable C may be electrically connected to the display panel 110 and a source PCB (S-PCB). The cable C may pass between the guide panel 13 and the end frame 17, and may be connected to the source PCB (S-PCB) at the rear of the frame 60. For example, the cable C may be a flexible flat cable (FFC).

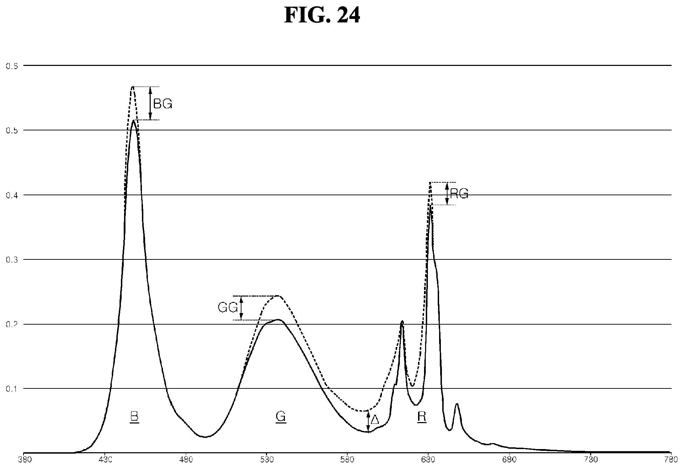

Referring to FIG. 24, it can be seen that an intensity of blue-based light B is reduced by a certain amount BG, an intensity of green-based light G is reduced by a certain amount GG, and an intensity of red-based light R is reduced by a certain amount RG.

In contrast, it can be seen that a boundary (Δ) between the green-based light G and the red-based light R becomes more distinct (indicated by a dotted circle).

It can be observed that the blue-based light B exhibits high color purity, and the green-based light G and the red-based light R also exhibit improved color purity. An increase in color purity may indicate improved color reproducibility, thereby enabling high image quality.

In other words, blue (B), green (G), and red (R) components are distributed separately, thereby exhibiting excellent color reproducibility. This is because the display device 100 (see FIG. 1) represents various colors through a combination of blue (B), green (G), and red (R). Further, since light provided by the display device 100 (see FIG. 1) is not biased toward any one particular color component, it is possible to achieve excellent color reproducibility (which may also be expressed as an appropriate color temperature).

Accordingly, based on the CIE 1976 chromaticity u'v' coordinate system, the display device 100 (see FIG. 1) may have an overlap area ratio of 93% or more between a color gamut provided by the display panel 110 (see FIG. 1) and a DCI-P3 color space, and may provide a luminance of 400 cd/m² or more under a white screen condition.

Referring to FIGS. 1 to 24, a display device may include: a light source including a phosphor containing β-SiAlON, KSF, and nitride to emit white light; a display panel configured to display an image using light provided from the light source; an optical sheet including a prism sheet and disposed on an optical path from the light source to the display panel; a light guide panel disposed on the optical path from the light source to the optical sheet; and a reflective sheet positioned opposite the optical sheet with respect to the light guide panel. The light source may be disposed adjacent to one side surface of the light guide panel so as to provide light into the light guide panel through the one side surface of the light guide panel. The light guide panel may include: a first layer having a first surface facing the reflective sheet, positioned on the reflective sheet, and including a light-absorbing material configured to selectively absorb at least one of yellow-based light or orange-based light; and a second layer having a second surface facing the optical sheet and positioned on the first layer. The first layer may have a reflective pattern formed on the first surface, and the second layer may have a prism pattern formed on the second surface. The first surface of the first layer may include: a first area adjacent to the one side surface of the light guide panel; a second area positioned between the first area and the other side surface of the light guide panel opposite to the one side surface of the light guide panel; and a third area positioned between the second area and the other side surface of the light guide panel. A number density of the reflective pattern in the first area may be less than a number density of the reflective pattern in the second area, and the number density of the reflective pattern in the second area may be less than a number density of the reflective pattern in the third area.

When a total number of dots forming the reflective pattern formed on the first surface of the first layer of the light guide panel is defined as 100%, a number of dots forming the reflective pattern in the first area may be 2% to 3%, a number of dots forming the reflective pattern in the second area may be 3% to 4%, and a number of dots forming the reflective pattern in the third area may be 6% to 7%.

The first surface of the first layer may further include: a fourth area positioned between the third area and the other side surface of the light guide panel; a fifth area positioned between the fourth area and the other side surface of the light guide panel; and a sixth area positioned between the fifth area and the other side surface of the light guide panel. A number of dots forming the reflective pattern in the fourth area may be 14.5% to 15.5%, a number of dots forming the reflective pattern in the fifth area may be 17% to 18%, and a number of dots forming the reflective pattern in the sixth area may be 28.5% to 29.5%.

The first surface of the first layer may further include a seventh area positioned between the sixth area and the other side surface of the light guide panel. A number of dots forming the reflective pattern in the seventh area may be less than the number of the dots forming the reflective pattern in the sixth area.

The number of the dots forming the reflective pattern in the seventh area may be 25.5% to 29.5%.

The light absorbed by the light-absorbing material may have a wavelength in a range of 570 nm to 610 nm.

Based on a CIE 1976 chromaticity u'v' coordinate system, the display device may have an overlap area ratio of 93% or more between a color gamut provided by the display panel and a DCI-P3 color space, and may provide a luminance of 400 cd/m² or more under a white screen condition.

The light-absorbing material may include Tetra Aza Porphyrin.

Light provided from the light source may be incident on a side surface of the light guide panel, reflected by the reflective sheet, and directed toward the optical sheet.

A color temperature of an image displayed on a front surface of the display panel may be in a range of 10,000 K to 12,000 K.

The display device may further include: a frame positioned opposite the light guide panel with respect to the reflective sheet and on which the reflective sheet is disposed; a housing disposed between the reflective sheet and the frame, and positioned adjacent to the light source; an optical assembly coupled to the housing, including the light source, and disposed at a side surface of the light guide panel; and a guide panel coupled to the frame or the housing and configured to support a rear surface adjacent to an edge of the display panel.

The light guide panel may have a thickness of 2 mm, and the reflective sheet may have a thickness of 0.255 mm.

A gap between the light source and the one side surface of the light guide panel may be 0.35 mm.

The optical sheet may have a thickness of 0.41 mm.

The light source may be provided in plurality, and the plurality of light sources may be disposed in the housing along a longitudinal direction of a lower side of the display panel.

Certain embodiments or other embodiments of the disclosure described above are not mutually exclusive or distinct from each other. Any or all elements of the embodiments of the disclosure described above may be combined or combined with each other in configuration or function.

The above detailed description is to be construed in all aspects as illustrative and not restrictive. The scope of the present disclosure should be determined by reasonable interpretation of the appended claims, and all changes coming within the equivalents of the present disclosure are intended to be embraced in the scope of the present disclosure.

## Claims

1. A display device comprising:
a light source including a phosphor comprising β-SiAlON, KSF, and nitride to emit white light;
a display panel configured to display an image using light provided from the light source;
an optical sheet including a prism sheet and disposed on an optical path from the light source to the display panel;
a light guide panel disposed on the optical path from the light source to the optical sheet; and
a reflective sheet positioned opposite the optical sheet with respect to the light guide panel,
wherein the light source is disposed adjacent to one side surface of the light guide panel so as to provide light into the light guide panel through the one side surface of the light guide panel,
wherein the light guide panel comprises:
a first layer having a first surface facing the reflective sheet, positioned on the reflective sheet, and including a light-absorbing material configured to selectively absorb at least one of yellow-based light or orange-based light; and
a second layer having a second surface facing the optical sheet and positioned on the first layer,
wherein the first layer has a reflective pattern formed on the first surface, and the second layer has a prism pattern formed on the second surface,
wherein the first surface of the first layer comprises:
a first area adjacent to the one side surface of the light guide panel;
a second area positioned between the first area and the other side surface of the light guide panel opposite to the one side surface of the light guide panel; and
a third area positioned between the second area and the other side surface of the light guide panel, and
wherein a number density of the reflective pattern in the first area is less than a number density of the reflective pattern in the second area, and the number density of the reflective pattern in the second area is less than a number density of the reflective pattern in the third area.

2. The display device of claim 1, wherein, when a total number of dots forming the reflective pattern formed on the first surface of the first layer of the light guide panel is defined as 100%,
a number of dots forming the reflective pattern in the first area is 2% to 3%;
a number of dots forming the reflective pattern in the second area is 3% to 4%; and
a number of dots forming the reflective pattern in the third area is 6% to 7%.

3. The display device of claim 2, wherein the first surface of the first layer further comprises:
a fourth area positioned between the third area and the other side surface of the light guide panel;
a fifth area positioned between the fourth area and the other side surface of the light guide panel; and
a sixth area positioned between the fifth area and the other side surface of the light guide panel, and
wherein:
a number of dots forming the reflective pattern in the fourth area is 14.5% to 15.5%;
a number of dots forming the reflective pattern in the fifth area is 17% to 18%; and
a number of dots forming the reflective pattern in the sixth area is 28.5% to 29.5%.

4. The display device of claim 3, wherein the first surface of the first layer further comprises a seventh area positioned between the sixth area and the other side surface of the light guide panel, and
wherein a number of dots forming the reflective pattern in the seventh area is less than the number of the dots forming the reflective pattern in the sixth area.

5. The display device of claim 4, wherein the number of the dots forming the reflective pattern in the seventh area is 25.5% to 29.5%.

6. The display device of claim 1, wherein the light absorbed by the light-absorbing material has a wavelength in a range of 570 nm to 610 nm.

7. The display device of claim 1, wherein, based on a CIE 1976 chromaticity u'v' coordinate system, the display device has an overlap area ratio of 93% or more between a color gamut provided by the display panel and a DCI-P3 color space, and provides a luminance of 400 cd/m² or more under a white screen condition.

8. The display device of claim 1, wherein the light-absorbing material comprises Tetra Aza Porphyrin.

9. The display device of claim 1, wherein light provided from the light source is incident on a side surface of the light guide panel, is reflected by the reflective sheet, and is directed toward the optical sheet.

10. The display device of claim 1, wherein a color temperature of an image displayed on a front surface of the display panel is in a range of 10,000 K to 12,000 K.

11. The display device of claim 1, further comprising:
a frame positioned opposite the light guide panel with respect to the reflective sheet and on which the reflective sheet is disposed;
a housing disposed between the reflective sheet and the frame, and positioned adjacent to the light source;
an optical assembly coupled to the housing, including the light source, and disposed at a side surface of the light guide panel; and
a guide panel coupled to the frame or the housing and configured to support a rear surface adjacent to an edge of the display panel.

12. The display device of claim 11, wherein:
the light guide panel has a thickness of 2 mm; and
the reflective sheet has a thickness of 0.255 mm.

13. The display device of claim 12, wherein a gap between the light source and the one side surface of the light guide panel is 0.35 mm.

14. The display device of claim 13, wherein the optical sheet has a thickness of 0.41 mm.

15. The display device of claim 14, wherein the light source is provided in plurality, and the plurality of light sources are disposed in the housing along a longitudinal direction of a lower side of the display panel.
